# EUROPÄISCHE PATENTANMELDUNG

(11) **EP 0 863 582 A1**
(43) Veröffentlichungstag der Anmeldung: **09.09.1998**
(21) Anmeldenummer: 98103327.7
(22) Anmeldetag: 26.02.1998
(51) Int. Cl.: H01R 19/40, H02G 3/14

(54) **Abdeckung für elektrische Installationsgeräte**

(30) Priorität: 07.03.1997 DE 19709489
(71) Anmelder: ABB PATENT GmbH, 68309 Mannheim (DE)
(72) Erfinder: Neumann, Wolfgang, Dipl.-Ing., 58849 Herscheid (DE)
(74) Vertreter: Rupprecht, Klaus, Dipl.-Ing.

(57) **Zusammenfassung**

Abdeckung (20) für elektrische Installationsgeräte (10) , zum Beispiel für Steckdosen, mit wenigstens einem Halteelement (22), wie Schraube, das zur Fixierung der Abdeckung (20) am zugeordneten Gerät (10) eingreift, wobei das Halteelement (20) als Schnellverschlußmittel vorgesehen ist, welches vorzugsweise formschlüssig mit dem zugeordneten Gerät (10) zusammenarbeitet und zumindest bei der Montage der Abdeckung (20) am zugeordneten Gerät (10) eine minimale Betätigung zur Fixierung erfordert.

## Beschreibung

Die Erfindung betrifft eine Abdeckung für elektrische Installationsgeräte, zum Beispiel für Steckdosen oder für solche Geräte, deren Abdeckungen wegen besonderer Anforderungen nur mittels Werkzeug montierbar und demontierbar sind, mit wenigstens einem Halteelement, wie Schraube, das zur Fixierung der Abdeckung am zugeordneten Gerät eingreift.

Es ist allgemein bekannt, daß die Abdeckungen für elektrische Installationsgeräte, insbesondere für UP-Installationsgeräte, an den zugeordneten Geräten dauerhaft befestigt sind. Hierbei hat sich durchgesetzt, daß die Abdeckungen für Schaltgeräte, wie Schalter, Taster, Dimmer und ähnliche, mittels angeformter oder zusätzlicher Federelemente kraftschlüssig am jeweiligen Gerät beziehungsweise an dessen Gerätesockel gehalten sind.

Für Steckdosen und andere zur Stromentnahme vorgesehenen Anschlußeinrichtungen, wie Herdanschlußdosen und ähnliches, besteht die Vorschrift, die Abdeckungen so zu fixieren, daß sie nicht infolge einer angreifenden Abzugkraft entfernt werden können. Zu diesem Zweck sind üblicherweise Halteschrauben mit metrischem Gewinde vorgesehen, die in hierfür entsprechend vorgesehene Gewindeöffnungen, zum Beispiel am zugeordneten Gerätesockel, eingreifen.

Zur Montage der Abdeckung muß jeweils die betreffende Halteschraube betätigt werden, ebenso wie bei der Demontage. Bei der Montage muß jeweils die Abdeckung ausgerichtet und dann in der definierten Lage gehalten werden. Ebenso muß diese Person zur Betätigung der Schrauben ein Schraubgerät halten.

Abgesehen davon, daß die Schraubbetätigung eine gewisse Zeit erfordert, in welcher die Abdeckung weiter gehalten werden muß, kann der Fall eintreten, daß aus bestimmten Gründen, zum Beispiel bei der Montage von Mehrfachkombinationen, eine weitere Person Hilfestellung geben muß, um die Montage in der gewünschten Art auszuführen. Dieses bedeutet beträchtlichen Mehraufwand, der durch die zeitaufwendige Schrauberei bei der Montage der Abdeckungen noch erhöht wird.

Hinzukommt, daß der Einsatz von motorbetriebenen oder von automatischen Schraubern bei Abdeckungsprogrammen mit hochwertigen Oberflächen, wie lackiert, eloxiert, galvanisiert wegen der Gefahr des Verkratzens der Abdeckungen, zum Beispiel beim versehentlichen Abrutschen meist nicht in Betracht kommt.

Ausgehend von diesem Stand der Technik ist es Aufgabe der Erfindung, eine Abdeckung der eingangs genannten Art zu schaffen, welche eine vereinfachte Montage der Abdeckungen bei gleichzeitiger Einhaltung der technischen Anschlußvorschriften gestattet.

Diese Aufgabe wird erfindungsgemäß durch die kennzeichnenden Merkmale des Anspruchs 1 gelöst. Weitere vorteilhafte Ausgestaltungen beziehungsweise bevorzugte Ausführungsformen der Erfindung sind in den Unteransprüchen angegeben.

Gemäß der Erfindung ist daher das Halteelement als Schnellverschlußmittel vorgesehen, welches vorzugsweise formschlüssig mit dem zugeordneten Gerät zusammenarbeitet und zumindest bei der Montage, das heißt beim Anbringen der Abdeckung am zugeordneten Gerät eine minimale Betätigung zur Fixierung erfordert.

Unter minimaler Betätigung wird hier und im folgenden eine handwerkliche Maßnahme durch die mit der Montage befaßte Person verstanden, die zeitlich nur kurz dauert, zum Beispiel 1 bis 2 Sekunden gegenüber der bisher erforderlichen Einschraubdauer von bis zu 40 Sekunden.

Gemäß einer ersten bevorzugten Ausführungsform ist für die Abdeckung als Halteelement ein Bajonettstift vorgesehen, welcher in eine hierzu kompatible Ausnehmung am zugeordneten Gerät eingreift und mittels Vierteldrehung um seine Längsachse in der Ausnehmung verankert ist.

Dabei kann vorteilhafterweise in den einander zugeordneten Halteflächen von Bajonettstift und Ausnehmung eine Raststufe vorgesehen sein, welche ein unbeabsichtigtes Lockerung der Verbindung verhindert, indem die Raststufe nur durch Aufbringen einer Mindestdrehkraft überwunden werden kann.

Um die Abdeckung sicher an dem zugeordneten Gerät zu halten, kann gemäß einer vorteilhaften Weiterbildung der als Halteelement vorgesehene Bajonettstift an seinen Halteflächen mit wenigstens einer Anlaufschräge versehen sein, welche bei der Drehung wirksam ist und hierbei die vom Bajonettstift gehaltene Abdeckung gegen das zugeordnete Gerät beaufschlagt. Hierdurch wird der Abdeckung eine Bewegungskomponente in Richtung auf das Gerät beziehungsweise auf die betreffende Montagefläche zu aufgeprägt, wodurch anderenfalls mögliche Spalte zwischen der Abdeckung und der Montagefläche geschlossen werden.

An Stelle einer Anlaufschräge kann der als Halteelement vorgesehene Bajonettstift an seinen Halteflächen auch mit einem Vorspannelement versehen sein, welches bei der Drehung wirksam ist und hierbei die vom Bajonettstift gehaltene Abdeckung gegen das zugeordnete Gerät beaufschlagt. Dieses Vorspannelement ist zweckmäßigerweise an dem mit der Abdeckung zusammenarbeitenden Ende des Bajonettstiftes angeordnet und vorzugsweise als in Axialrichtung wirksamer Spannring vorgesehen. Hierunter ist ein ringförmiges Federelement zu verstehen, welches in axialer Richtung federnd nachgibt, so daß Spalte bis zu etwa 1 mm hiermit sicher beherrscht werden, wobei die Abdeckung stets gegen Lockerwerden gesichert ist.

Gemäß einer alternativen Ausführungsform kann die Abdeckung als Halteelement eine Schnellschraube mit asymmetrisch ausgebildeten ersten und zweiten Gewindeflanken aufweisen, wobei die dem Gegengewinde zugewandte erste Gewindeflanken bei der Montage ein rastendes Durchrutschen durch das Gegengewinde erlauben, während sich die zur Halterung am Gegengewinde vorgesehenen zweiten Gewindeflanken daran abstützen.

Gemäß einer bevorzugten Ausgestaltung der Erfindung sind die Flanken des Außengewindes der betreffenden Schnellschrauben so geformt, daß der Flankenwinkel zwischen den Außenflächen benachbarter Flanken wenigstens 90° beträgt, wobei die Gewindetiefe etwa 2 bis 8 %, vorteilhafterweise 4%, des Außendurchmessers der Schnellschrauben beträgt.

Zur sicheren Halterung der Abdeckung sind in weiterer Ausgestaltung der Erfindung die ersten Gewindeflanken unter einem Winkel ≤45° zur Längsachse angeschrägt und die zweiten Gewindeflanken unter einem Winkel von ≥ 45° zur Längsachse angeschrägt.

Ein weiteres Halteelement für die Abdeckung als lösbarer Spreizdübel vorgesehen sein, der vorzugsweise zentrale Ausnehmung mit einem lösbarem Einsatz aufweist, wobei der lösbare Einsatz als an seinem Umfang mit Anformungen zur Verrastung versehener Stift ausgebildet ist.

Diese und weitere vorteilhafte Ausgestaltungen und Verbesserungen der Erfindung sind Gegenstand der Unteransprüche.

Derartige Schnellbefestigungen sind an sich bereits für andere Anwendungen im Stand der Technik als Vierteldrehverschluß, als Druckdrehverschluß oder als sogenannter Dzus-Pilotverschluß bekannt. Allerdings hat bei den bekannten Schnellbefestigungen bisher ihre teilweise zu große Baugröße beziehungsweise die hierfür erforderliche besondere Formanpassung deren Verwendung verhindert. Aus diesem Grunde sind derartige Schnellbefestigungen für elektrische Installationsgeräte seither nicht in Betracht gezogen worden.

Anhand eines in der schematischen Zeichnung dargestellten Ausführungsbeispiels sollen die Erfindung, vorteilhafte Ausgestaltungen und Verbesserungen sowie besondere Vorteile der Erfindung näher erläutert und beschrieben werden.

Es zeigen:
- Fig. 1: einen Längsschnitt durch ein als Schutzkontaktsteckdose ausgebildetes elektrisches Installationsgerät mit einer erfindungsgemäßen Abdeckung und
- Fig. 2: eine Draufsicht auf die Anordnung gemäß Fig. 1.

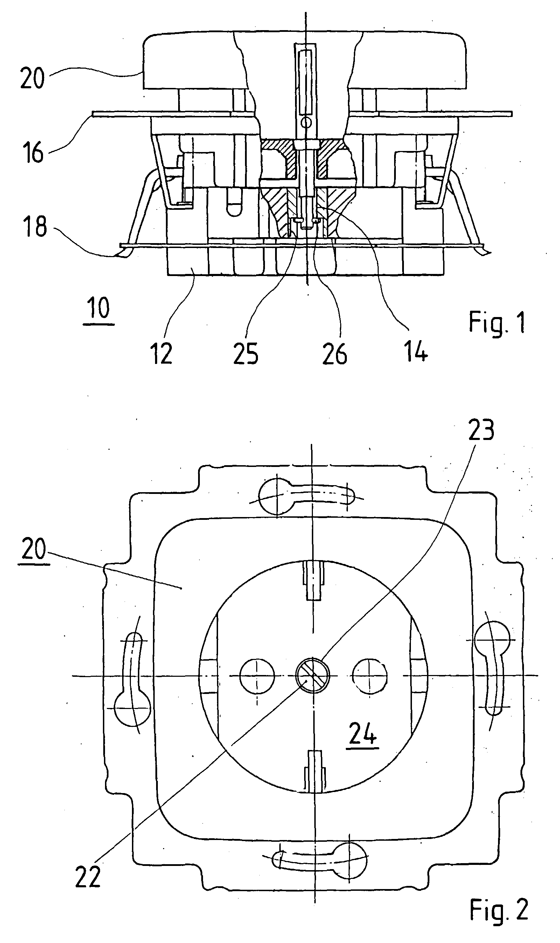

In Fig. 1 ist ein als Schutzkontaktsteckdose ausgebildetes elektrisches Installationsgerät 10 für den Unterputzeinbau in Seitenansicht mit teilweisem Längsschnitt dargestellt. Das Installationsgerät 10 besitzt in an sich bekannter Weise einen Sockel 12, an welchem ein Tragring 16 frontseitig anschließt. Ferner ist das Installatiosgerät mit seitlich am Sockel 12 beziehungsweise am Tragring 14 angeordneten Spreizen 18 versehen.

Zur Frontseite hin ist das Installationsgerät 10 mit einer Abdeckung 20 versehen, die im gezeigten Beispiel als Teil einer Kombination mehrerer Installationsgeräte 10 mit gemeinsamem, hier nicht dargestellten Rahmen vorgesehen ist.

Die erfindungsgemäße Abdeckung 20 ist mit einem entsprechend der gültigen Vorschriften nur mittels hier nicht dargestelltem Werkzeug lösbaren Halteelement 22 am Sockel 12 befestigt, welches im Boden des sogenannten Steckertopfes 24 eingesetzt ist. Dabei ist anhand der Darstellung in Fig. 1 ersichtlich, daß das Haltelement 22 von einem bajonettartig ausgebildeten Stift gebildet ist, der an seinem geräteseitigen Ende einen Querzapfen 24 aufweist, der diametral übersteht und mit einer entsprechenden Ausnehmung 14 im Sockel 12 korrespondiert. Wie aus Fig. 1 zu erkennen ist, weist die Ausnehmung 13 entsprechend einem Bajonettverschluß eine Hinterschneidung 25 auf, in welche der Querzapfen nach einer Vierteldrehung eingreift. An Stelle eines Querstiftes 24 kann die Verankerung ebenso mittels einer am Stiftschaft angeformten Nase oder auf ähnliche Weise bewirkt werden.

Anhand von Fig. 2 ist ersichtlich, daß der Haltestift 22 einen diametralen Schlitz 23 entsprechend einer Schlitzschraube aufweist, welcher zum Eingriff des erforderlichen Lösewerkzeugs dient.

Erfindungsgemäß kann nun an Stelle des Bajonettstiftes 22 auch jedes andere Schnellbefestigungsmittel, wie es in der Beschreibungseinleitung erwähnt ist, vorgesehen sein, wobei lediglich die entsprechende Aufnahmeöffnung im Sockel 12 entsprechend vorbereitet sein muß.

## Patentansprüche

1. Abdeckung (20) für elektrische Installationsgeräte (10), zum Beispiel für Steckdosen, mit wenigstens einem Halteelement (22), wie Schraube, das zur Fixierung der Abdeckung (20) am zugeordneten Gerät (10) eingreift, dadurch gekennzeichnet, daß das Halteelement (20) als Schnellverschlußmittel vorgesehen ist, welches vorzugsweise formschlüssig mit dem zugeordneten Gerät (10) zusammenarbeitet und zumindest bei der Montage der Abdeckung (20) am zugeordneten Gerät (10) eine minimale Betätigung zur Fixierung erfordert.

2. Abdeckung nach Anspruch 1, dadurch gekennzeichnet, daß als Halteelement (22) ein Bajonettstift vorgesehen ist, welcher in eine hierzu kompatible Ausnehmung (14) am zugeordneten Gerät (10) eingreift und mittels Vierteldrehung um seine Längsachse in der Ausnehmung (14) verankert ist.

3. Abdeckung nach Anspruch 2, dadurch gekennzeichnet, daß der als Halteelement vorgesehene Bajonettstift (22) oder die korrespondierende Ausnehmung (14) an den Halteflächen mit einer Anlaufschräge versehen ist, welche bei der Drehung des Bajonettstiftes (22) wirksam ist und hierbei die vom Bajonettstift (22) gehaltene Abdeckung gegen das zugeordnete Gerät (10) beaufschlagt.

4. Abdeckung nach Anspruch 2, dadurch gekennzeichnet, daß der als Halteelement vorgesehene Bajonettstift (22) an seinen Haltekopf mit einem Vorspannelement versehen ist, welches bei der Drehung wirksam ist und hierbei die vom Bajonettstift (22) gehaltene Abdeckung (20) gegen das zugeordnete Gerät (10) beaufschlagt.

5. Abdeckung nach Anspruch 4, dadurch gekennzeichnet, daß das Vorspannelement als Federscheibe oder als in Axialrichtung wirksamer Spannring vorgesehen ist.

6. Abdeckung nach Anspruch 1, dadurch gekennzeichnet, daß als Halteelement eine Schnellschraube mit asymmetrisch ausgebildeten ersten und zweiten Gewindeflanken vorgesehen ist, daß die dem Gegengewinde zugewandten ersten Gewindeflanken bei der Montage ein rastendes Durchrutschen durch das Gegengewinde erlauben, wobei sich die zur Halterung am Gegengewinde vorgesehenen zweiten Gewindeflanken daran abstützen.

7. Abdeckung nach Anspruch 6, dadurch gekennzeichnet, daß der Flankenwinkel zwischen den Außenflächen benachbarter Flanken wenigstens 90^{°} beträgt.

8. Abdeckung nach Anspruch 6 oder 7, dadurch gekennzeichnet, daß die ersten Gewindeflanken unter einem Winkel ≤45° zur Längsachse angeschrägt sind und daß die zweiten Gewindeflanken unter einem Winkel von ≥ 45° zur Längsachse angeschrägt sind.

9. Abdeckung nach Anspruch 1, dadurch gekennzeichnet, daß als Halteelement ein lösbarer Spreizdübel vorgesehen ist.

10. Abdeckung nach Anspruch 9, dadurch gekennzeichnet, daß der Spreizdübel eine zentrale Ausnehmung mit einem lösbarem Einsatz aufweist.

11. Abdeckung nach Anspruch 10, dadurch gekennzeichnet, daß der lösbare Einsatz als ein an seinem Umfang mit Anformungen zur Verrastung in der zentralen Ausnehmung des Spreizdübels versehener Stift ausgebildet ist.
